# EUROPEAN PATENT SPECIFICATION

(11) **EP 3 085 122 B1**
(45) Date of publication and mention of the grant of the patent: **27.03.2019**
(21) Application number: 14871032.0
(22) Date of filing: 18.12.2014
(51) Int. Cl.: H04W 4/02

(54) **SYSTEM AND METHOD TO UTILIZE GEO-FENCES**
SYSTEM UND VERFAHREN ZUR VERWENDUNG VON GEOFENCES
SYSTÈME ET PROCÉDÉ POUR UTILISER DES BARRIÈRES GÉOGRAPHIQUES

(30) Priority: 20.12.2013 US 201314137372
(43) Date of publication of application: 26.10.2016
(73) Proprietor: eBay, Inc., San Jose, CA 95125 (US)
(72) Inventor: JAIN, Chintan, Ashburn, Virginia 20148 (US); KONG, Rui, Lake Oswego, Oregon 97035 (US)
(74) Representative: Schwegman Lundberg Woessner Limited
(86) International application number: PCT/US2014/071307
(87) International publication number: WO 2015/095610

(56) References cited:
- US-A1- 2008 312 946
- US-A1- 2010 279 706
- US-A1- 2010 279 713
- US-A1- 2010 279 713
- US-A1- 2013 072 226
- US-A1- 2013 238 366
- US-A1- 2013 238 366
- "Secure User Plane Location Architecture ; OMA-AD-SUPL-V3_0-20110920-C", OMA-AD-SUPL-V3_0-20110920-C, OPEN MOBILE ALLIANCE (OMA), 4330 LA JOLLA VILLAGE DR., SUITE 110 SAN DIEGO, CA 92122 ; USA , no. 3.0 20 September 2011 (2011-09-20), pages 1-43, XP064184157, Retrieved from the Internet: URL:ftp/Public_documents/LOC/Permanent_doc uments/ [retrieved on 2014-09-10]
- "User Plane Location Protocol ; OMA-TS-ULP-V3_0-20110920-C", OMA-TS-ULP-V3_0-20110920-C, OPEN MOBILE ALLIANCE (OMA), 4330 LA JOLLA VILLAGE DR., SUITE 110 SAN DIEGO, CA 92122 ; USA , no. 3.0 20 September 2011 (2011-09-20), pages 1-287, XP064092610, Retrieved from the Internet: URL:ftp/Public_documents/LOC/Permanent_doc uments/ [retrieved on 2011-10-12]

## Description

### CLAIM OF PRIORITY

This international application claims the benefit of priority to U.S. Patent Application Serial No. 14/137,372 filed December 20, 2013.

### TECHNICAL FIELD

This application relates to the technical fields of software and/or hardware technology and, in one example embodiment, to system and method to utilize geo-fences to limit calls to a server system from a user's mobile device.

### BACKGROUND

A geo-fence is a virtual boundary corresponding to a shape on the surface of the Earth. Geographic location may be detected by the use of the Global Positioning System (GPS). Using geo-fences (also referred to as merely "fences") together with GPS-enabled devices may be referred to as geo-fencing. An event associated with a user crossing from outside a geo-fence shape to inside that shape, based on the geographic location of the user determined by the GPS, is referred to as the fence being broken. GPS-enabled mobile devices may be used in combination with geo-fences for the purpose of triggering an action when mobile location-enabled devices enter and/or exit said boundaries. For example, a user may get a notification via their mobile device of an item being on sale. In another example, a merchant who operates inside that geo-fence may get a notification that the user is coming to pick up their item. A typical way that geo-fencing is done is that the fence gets sent down to a GPS-enabled device, such as, for example, a mobile device. The mobile device monitors the user's location and sends location information, periodically, to a server system. D5 "User Plane Location Protocol; OMA-TS-ULP-V3_0-20110920-C", OMA-TS-ULP-V3_0-20110920-C, OPEN MOBILE ALLIANCE (OMA), 4330 LA JOLLA VILLAGE DR., SUITE 110 SAN DIEGO, CA 92122; USA, no. 3.0 20 September 2011 (2011-09-20), pages 1-287, XP064092610, Retrieved from the Internet: URL:ftp/Public_documents/LOC/ Permanent_documents/ [retrieved on 2011-10-12] defines location applications for mobile devices. It defines different types of geo-fences: e.g. inside geo-fence (mobile sends location reports when inside the geo-fence) and outside geo-fence (mobile sends location reports when outside the geo-fence). The geo-fences may be combined.

### BRIEF DESCRIPTION OF DRAWINGS

The invention is defined by the method of independent claim 1, the mobile device of independent claim 4 and the machine-readable medium with instructions of independent claim 5. Dependent claims define preferred embodiments. Embodiments of the present invention are illustrated by way of example and not limitation in the figures of the accompanying drawings, in which like reference numbers indicate similar elements and in which:
Fig. 1 is a diagrammatic representation of a network environment within which an example method and system to utilize geo-fences to limit calls to a server system from a user's mobile device may be implemented;
Fig. 2 is block diagram of a system to utilize geo-fences to limit calls to a server system from a user's mobile device, in accordance with one example embodiment;
Fig. 3 is a flow chart of a method to utilize geo-fences to limit calls to a server system from a user's mobile device, in accordance with an example embodiment; and
Fig. 4 is a diagrammatic representation of an example machine in the form of a computer system, within which a set of instructions, for causing the machine to perform any one or more of the methodologies discussed herein, may be executed.

### DETAILED DESCRIPTION

Method and system are provided that utilize geo-fences to limit calls to a server system from a user's mobile device. In the following description, for purposes of explanation, numerous specific details are set forth in order to provide a thorough understanding of example embodiments. It will be evident, however, to one skilled in the art that the present invention may be practiced without these specific details.

As used herein, the term "or" may be construed in either an inclusive or exclusive sense. Similarly, the term "exemplary" is merely to mean an example of something or an exemplar and not necessarily a preferred or ideal means of accomplishing a goal. Additionally, although various exemplary embodiments discussed below may utilize Java-based servers and related environments, the embodiments are given merely for clarity in disclosure. Thus, any type of server environment, including various system architectures, may employ various embodiments of the application-centric resources system and method described herein and is considered as being within a scope of the present invention.

Geo-fences may be created on the server side and may represent so-called high engagement areas where a service provider would like to alert potential consumers to the availability of the service, to any deals or promotions, etc. Geo-fences can be downloaded to a GPS-enabled mobile device. A computing application executing on a mobile device - termed a geo-fencing application - may be configured to collect location information and periodically report the location information to a server system. A geo-fencing application may also download geo-fences from a server system to the mobile device. Both the reporting of the location to the server and the downloading of geo-fences may be battery-intensive and may result in quickly draining the battery of a mobile device. While a geo-fence may be useful for determining that a user has entered a high engagement area, it may also be beneficial to designate low-engagement or non-engagement geographical areas, where a service provider is not as interested or not at all interested in engaging potential customers with respect to their service. A low or non-engagement geographical area may be represented by a so-called passive geo-fence. A passive geo-fence may also be referred to as an anti geo-fence, as it may be used to trigger behaviour that may be seen as the opposite of behaviour typically triggered by detecting a geo-fence. For the purposes of this description, a geo-fence that is not a passive geo-fence may be referred to as an active geo-fence.

A geo-fencing application executing on a mobile device may be configured to detect, based on the monitored location information, that the associated mobile device has entered the area represented by a passive geo-fence and stop reporting location information to the server until the mobile device is outside the area represented by the passive geo-fence. The geo-fencing application may also be configured to switch to a mode where location information is collected less frequently or not at all while the associated mobile device is within an area represented by a passive geo-fence and resume the original frequency of location collection when the mobile device has left the area represented by a passive geo-fence.

For example, if a service provider or a merchant is operating predominantly or exclusively in a particular state, e.g., in California, it may not be desirable to track a user's location while the user is outside of California. The service provider's app executing on the user's mobile device may be configured to recognize that a particular geo-fence that has been crossed is a passive geo-fence and, in response to detecting that the mobile device is located within a passive geo-fence, stop reporting location information to the provider's server and fetching other geo-fences until the mobile device is outside the area represented by the passive geo-fence.

In one embodiment, a passive geo-fence may be created to represent an area within an active (or a non-passive) geo fence (a geo-fence that represents an engagement area as defined by the service provider). Using both such geo-fences may result in creating a doughnut-shaped area of engagement. In operation, when a mobile device enters a geo-fence (an active geo-fence) that encompasses a passive geo-fence, the geo-fencing application reports the location information to the associated server system, but stops reporting the location information to the server when the mobile device enters the passive geo-fence, even though the mobile device is still within the area represented by the active geo-fence. A passive geo-fence thus may operate as "a black hole" within an active geo-fence to exclude areas within a geographical location where the service provider does not wish to target potential customers.

For example, a service provider or a merchant may wish to target all users within the Portland Metropolitan area, but there are certain neighbourhoods within Portland that does not have the user demographics that the service provider wishes to target. The service provider may benefit from utilizing an active geo-fence that represents the entire Portland Metropolitan area together with a passive geo-fence that represents the area within the Portland Metropolitan area where the service provider does not wish to target potential customers. The geo-fencing application may be configured to recognize a single passive geo-fence within an active geo-fence or multiple passive geo-fences within a single active geo-fence.

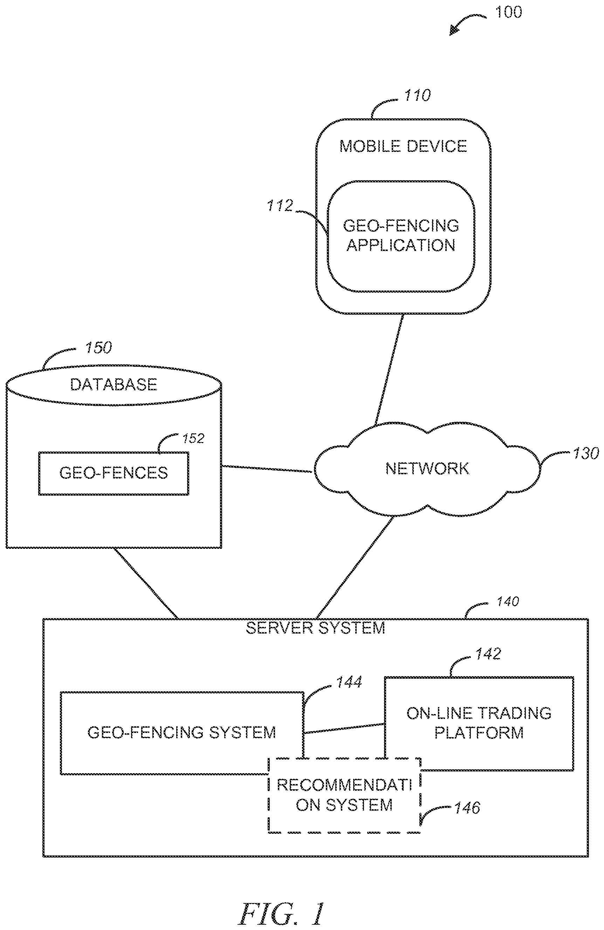

An example method and system to utilize geo-fences to limit or eliminate calls to a server system from a user's mobile device may be implemented in the context of a network environment 100 illustrated in Fig. 1. As shown in Fig. 1, the network environment 100 may include a mobile device 110, and a server system 140. The mobile device 110 may be a GPS-enabled device and may execute a mobile application, such as, e.g., a geo-fencing application 122. The geo-fencing application 122 may be configured to permit an associated service provider or a merchant to provide a user of the mobile device 110 with information about their products or services while taking into account the user's current geographical location. The geo-fencing application 122 may be configured to include functionality to utilize geo-fences in a way to limit calls to the server system 140 from the mobile device 110.

The geo-fencing application 112 may be related to an on-line trading platform 142 hosted at the server system 140. The mobile device 110 may have access to the server system 140 hosting the on-line trading platform 142 via a communications network 130. The communications network 130 may be a public network (e.g., the Internet, a mobile communication network, or any other network capable of communicating digital data).

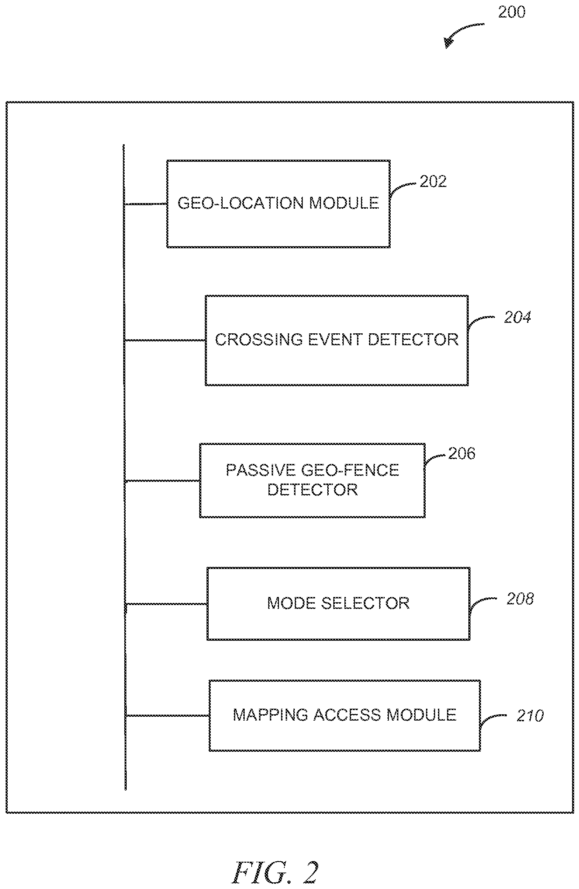

As shown in Fig. 1, the server system 140 also hosts a geo-fencing system 144 and a recommendation system 146. In one example embodiment, the geo-fencing system 144 is configured to receive, from the mobile device 110, a stream of locations obtained by the GPS provided with the mobile device 110 and make one or more previously-stored geo-fences available for fetching by the mobile device 110. Geo-fences may be stored in the database 150 as geo-fences 152 and may be identified as active geo-fences or passive geo-fences. The recommendation system 146 may be provided as part of the geo-fencing system 144, as part of the on-line trading platform 142 or any other web-based platform that cooperates with the geo-fencing system 144, or it can be a stand-alone system. The recommendation system 146 may be configured to generate recommendations that may be based on the geo-location data monitored by the geo-fencing system 144. An example geo-fencing application that includes functionality to utilize geo-fences to limit calls to a server system from a user's mobile device is illustrated in Fig. 2.

Fig. 2 is a block diagram of a system 200 to utilize geo-fences to limit calls to a server system from a user's mobile device, in accordance with one example embodiment. In one embodiment, the system 200 corresponds to the geo-fencing application 112 executing at the mobile device 110 of Fig. 1. As shown in Fig. 2, the system 200 includes a geo-location module 202, a crossing event detector 204, a passive geo-fence detector 206, and a mode selector 208. The geo-location module 202 may be configured to determine geographical location of a mobile device and to report the location data to a server system, e.g., to the geo-fencing system 144 executing at the server system 140 of Fig. 1. The a crossing event detector 204 may be configured to determine, based on the current geographical location, that the mobile device 110 is within an area represented by a particular geo-fence, based on the current geographical location of the mobile device 110. The passive geo-fence detector 206 may be configured to determine that the geo-fence is a passive geo-fence. This determination may be made, e.g., based on a presence of a tag (a passive flag) associated with the geo-fence that indicates that the geo-fence is a passive geo-fence. In some embodiments, the passive geo-fence detector 206 determines that the geo-fence is a passive geo-fence by accessing a mapping information that provides identification of the geo-fence as a passive geo-fence. The mapping information may be stored locally on the mobile device 110. The passive geo-fence detector 206 may also be configured to access mapping information that is being stored remotely, e.g., at the server system 140.

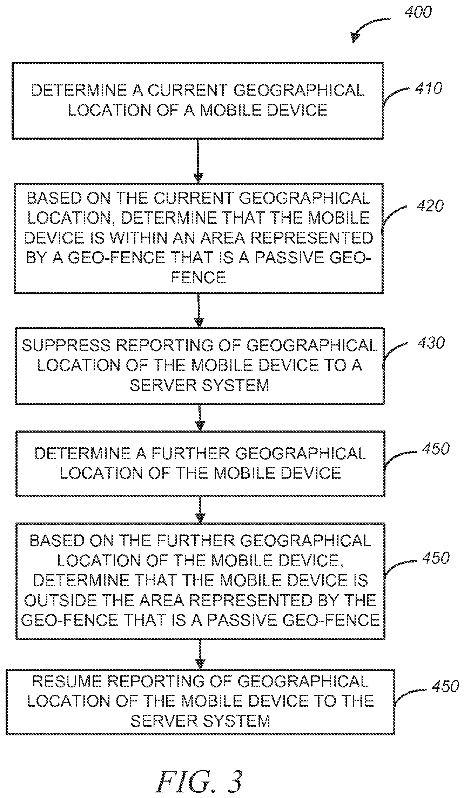

The mode selector 208 may be configured to suppress reporting of geographical location of the mobile device 110 to the server system 140, once it is determined that the mobile device is within the area represented by the geo-fence that is a passive geo-fence. The mobile device 110 may thus stop reporting its location to the server 140 until the mobile device is outside of the area represented by a passive geo-fence. The mode selector 208 may also be configured to reduce frequency, with which the geo-location module collects location information, while the mobile device 110 is within the area represented by a passive geo-fence. Example operations performed by the geo-fencing application 112 are described with reference to Fig. 3.

Fig. 3 is a flow chart of a method 300 to utilize geo-fences to limit calls to a server system from a user's mobile device, according to one example embodiment. The method 300 may be performed by processing logic that may comprise hardware (e.g., dedicated logic, programmable logic, microcode, etc.), software (such as run on a general purpose computer system or a dedicated machine), or a combination of both. In one example embodiment, the processing logic resides at the mobile device 110 of Fig. 1.

As shown in Fig. 3, the method 300 commences at operation 310, when the geo-location module 202 of Fig. 2 determines a current geographical location of a mobile device. The crossing event detector 204 of Fig. 2 determines, based on the current geographical location, that the mobile device 110 is within an area represented by a passive geo-fence, at operation 420. As explained above, this determination may be made based on a presence of a tag associated with the geo-fence that indicates that the geo-fence is a passive geo-fence or based on the examination of mapping information that provides identification of the geo-fence as a passive geo-fence. In response to determining that the mobile device is within an area represented by a passive geo-fence, the mode selector 208 of Fig. 2 suppresses reporting of geographical location of the mobile device 110 to the server system 140 (operation 430), such that the mobile device 110 stops reporting its location to the server 140 until the mobile device is outside of the area represented by a passive geo-fence. At operation 450, the geo-location module 202 detects a further geographical location of the mobile device 110. Based on this new location, the crossing event detector 204 determines that the mobile device 110 is outside the area represented by the passive geo-fence, at operation 450. In response to determining that the mobile device is outside the area represented by the passive geo-fence, the mode selector 208 permits resuming of the reporting of geographical location of the mobile device 110 to the server system 140 (operation 450).

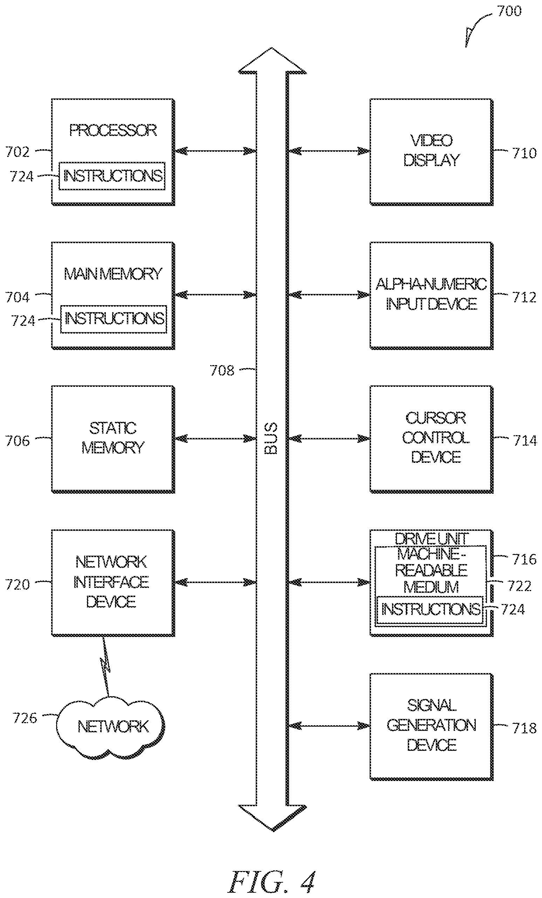

Fig. 4 is a diagrammatic representation of a machine in the example form of a computer system 700 within which a set of instructions, for causing the machine to perform any one or more of the methodologies discussed herein, may be executed. In alternative embodiments, the machine operates as a stand-alone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU) or both), a main memory 704 and a static memory 706, which communicate with each other via a bus 707. The computer system 700 may further include a video display unit 710 (e.g., a liquid crystal display (LCD) or a cathode ray tube (CRT)). The computer system 700 also includes an alpha-numeric input device 712 (e.g., a keyboard), a user interface (UI) navigation device 714 (e.g., a cursor control device), a drive unit 716, a signal generation device 718 (e.g., a speaker) and a network interface device 720.

The drive unit 716 includes a machine-readable medium 722 on which is stored one or more sets of instructions and data structures (e.g., software 724) embodying or utilized by any one or more of the methodologies or functions described herein. The software 724 may also reside, completely or at least partially, within the main memory 704 and/or within the processor 702 during execution thereof by the computer system 700, with the main memory 704 and the processor 702 also constituting machine-readable media.

The software 724 may further be transmitted or received over a network 726 via the network interface device 720 utilizing any one of a number of well-known transfer protocols (e.g., Hyper Text Transfer Protocol (HTTP)).

While the machine-readable medium 722 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing and encoding a set of instructions for execution by the machine and that cause the machine to perform any one or more of the methodologies of embodiments of the present invention, or that is capable of storing and encoding data structures utilized by or associated with such a set of instructions. The term "machine-readable medium" shall accordingly be taken to include, but not be limited to, solid-state memories, optical and magnetic media. Such media may also include, without limitation, hard disks, floppy disks, flash memory cards, digital video disks, random access memory (RAMs), read only memory (ROMs), and the like. Furthermore, the tangible machine-readable medium is non-transitory in that it does not embody a propagating signal. However, labeling the tangible machine-readable medium as "non-transitory" should not be construed to mean that the medium is incapable of movement - the medium should be considered as being transportable from one physical location to another. Additionally, since the machine-readable medium is tangible, the medium may be considered to be a machine-readable device.

The embodiments described herein may be implemented in an operating environment comprising software installed on a computer, in hardware, or in a combination of software and hardware. Such embodiments of the inventive subject matter may be referred to herein, individually or collectively, by the term "invention" merely for convenience and without intending to voluntarily limit the scope of this application to any single invention or inventive concept if more than one is, in fact, disclosed.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is tangible unit capable of performing certain operations and may be configured or arranged in a certain manner. In example embodiments, one or more computer systems (e.g., a standalone, client or server computer system) or one or more processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired) or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses) that connect the hardware-implemented modules. In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs).)

Thus, method and system to utilize geo-fences to limit calls to a server system from a user's mobile device has been described. Accordingly, the specification and drawings are to be regarded in an illustrative rather than a restrictive sense.

## Claims

1. A method implemented in a mobile device (110) having at least one processor, the method comprising:
determining a first geographical location of the mobile device (110) using GPS;
based on a first geographical location, determining that the mobile device (110) is within an area represented by a first geo-fence that is an active geo-fence, the first geofence that is an active geo-fence representing a high-engagement area with respect to a service provided by a service provider;
in response to the determining that the mobile device (110) is within the area represented by the first geo-fence that is an active geo-fence, periodically reporting the geographical location of the mobile device (110) to a server system (140) of the service provider;
determining a second geographical location of the mobile device (110) using GPS;
based on a second geographical location, determining that the mobile device (110) has moved to within an area represented by a second geo-fence within the area of the first geo-fence that is an active geo-fence and determining that the second geo-fence is a passive geo-fence by accessing a tag, flag or mapping information that indicates that the second geo-fence is a passive geo-fence, the second geo-fence that is a passive geo-fence representing a low-engagement area with respect to the service provided by the service provider; and
in response to the determining that the mobile device (110) is within the area represented by the second geo-fence that is a passive geo-fence, reducing the frequency of reporting or stopping reporting of geographical location of the mobile device to the server system (140).

2. The method of claim 1, comprising:
determining a further geographic location of the mobile device (110) using GPS;
based on the further geographical location, determining that the mobile device (110) is outside of the area represented by the second geo-fence that is a passive geo-fence and in the area represented by the first geo-fence that is an active geofence; and
resuming reporting of geographical location of the mobile device (110) to the server system (140).

3. The method of claim 1, comprising storing the mapping information on the mobile device (110), or accessing the mapping information at the server system (140).

4. A mobile device (110) comprising:
a memory; and
at least one processor coupled to the memory, the memory storing code to control the at least one processor to carry out the method of any one of claims 1 to 3.

5. A machine-readable medium carrying instructions to cause a machine to carry out the method of any one of claims 1 to 3.

## Patentansprüche

1. Verfahren, implementiert in einer mobilen Vorrichtung (110), die mindestens einen Prozessor hat, wobei das Verfahren umfasst:
Bestimmen eines ersten geographischen Orts der mobilen Vorrichtung (110) unter Verwendung von GPS;
basierend auf einem ersten geographischen Ort, Bestimmen, dass die mobile Vorrichtung (110) innerhalb eines Bereichs ist, repräsentiert mittels eines ersten Geo-Zauns, der ein aktiver Geo-Zaun ist, wobei der erste Geo-Zaun, der ein aktiver Geo-Zaun ist, einen Hochinanspruchnahmebereich repräsentiert in Bezug auf einen Service, bereitgestellt mittels eines Service-Providers;
als Antwort auf das Bestimmen, dass die mobile Vorrichtung (110) innerhalb des Bereichs ist, repräsentiert mittels des ersten Geo-Zauns, der ein aktiver Geo-Zaun ist, periodisch den geographischen Ort der mobilen Vorrichtung (110) an ein Server-System (140) des Service-Providers zu berichten;
Bestimmen eines zweiten geographischen Orts der mobilen Vorrichtung (110) unter Verwendung von GPS;
basierend auf einem zweiten geographischen Ort, Bestimmen, dass die mobile Vorrichtung (110) sich innerhalb eines Bereichs bewegt hat, repräsentiert mittels eines zweiten Geo-Zauns innerhalb des Bereichs des ersten Geo-Zauns, der ein aktiver Geo-Zaun ist, und Bestimmen, dass der zweite Geo-Zaun ein passiver Geo-Zaun ist mittels Zugreifens auf einen Tag, Flag oder Karteninformationen, die anzeigen, dass der zweite Geo-Zaun ein passiver Geo-Zaun ist, wobei der zweite Geo-Zaun, der ein passiver Geo-Zaun ist, einen Niedriginanspruchnahmebereich repräsentiert in Bezug auf den Service, bereitgestellt mittels des Service-Providers; und
als Antwort auf das Bestimmen, dass die mobile Vorrichtung (110) innerhalb des Bereichs ist, repräsentiert mittels des zweiten Geo-Zauns, der ein passiver Geo-Zaun ist, Reduzieren der Frequenz des Berichtens oder Stoppen des Berichtens des geographischen Orts der mobilen Vorrichtung an das Server-System (140).

2. Verfahren nach Anspruch 1, umfassend:
Bestimmen eines weiteren geographischen Orts der mobilen Vorrichtung (110) unter Verwendung von GPS;
basierend auf dem weiteren geographischen Ort, Bestimmen, dass die mobile Vorrichtung (110) außerhalb des Bereichs ist, repräsentiert mittels des zweiten Geo-Zauns, der ein passiver Geo-Zaun ist, und in dem Bereich, repräsentiert mittels des ersten Geo-Zauns, der ein aktiver Geo-Zaun ist; und
Wiederaufnehmen des Berichtens des geographischen Orts der mobilen Vorrichtung (110) an das Server-System (140).

3. Verfahren nach Anspruch 1, umfassend Speichern der Karteninformationen auf der mobilen Vorrichtung (110), oder Zugreifen auf Karteninformationen an dem Server-System (140).

4. Mobile Vorrichtung (110), umfassend:
einen Speicher; und
mindestens einen Prozessor, gekoppelt mit dem Speicher, wobei der Speicher Code speichert, um den mindestens einen Prozessor zu steuern, um das Verfahren nach einem der Ansprüche 1 bis 3 auszuführen.

5. Maschinenlesbares Medium, das Anweisungen trägt, um eine Maschine zu veranlassen, das Verfahren nach einem der Ansprüche 1 bis 3 auszuführen.

## Revendications

1. Procédé mis en oeuvre dans un dispositif mobile (110) ayant au moins un processeur, le procédé comprenant :
la détermination d'un premier emplacement géographique du dispositif mobile (110) à l'aide d'un GPS ;
sur la base d'un premier emplacement géographique, la détermination que le dispositif mobile (110) est à l'intérieur d'une zone représentée par une première barrière géographique qui est une barrière géographique active, la première barrière géographique qui est une barrière géographique active représentant une zone de forte implication en ce qui concerne un service fourni par un fournisseur de services ;
en réponse à la détermination que le dispositif mobile (110) est à l'intérieur de la zone représentée par la première barrière géographique qui est une barrière géographique active, l'indication périodique de l'emplacement géographique du dispositif mobile (110) à un système de serveur (140) du fournisseur de services ;
la détermination d'un second emplacement géographique du dispositif mobile (110) à l'aide d'un GPS;
sur la base d'un second emplacement géographique, la détermination que le dispositif mobile (110) s'est déplacé à l'intérieur d'une zone représentée par une seconde barrière géographique à l'intérieur de la zone de la première barrière géographique qui est une barrière géographique active et la détermination que la seconde barrière géographique est une barrière géographique passive en accédant à des informations de balise, de drapeau ou de mappage qui indiquent que la seconde barrière géographique est une barrière géographique passive, la seconde barrière géographique qui est une barrière géographique passive représentant une zone de faible implication en ce qui concerne le service fourni par le fournisseur de services ; et
en réponse à la détermination que le dispositif mobile (110) est à l'intérieur de la zone représentée par la seconde barrière géographique qui est une barrière géographique passive, la réduction de la fréquence de l'indication ou l'arrêt de l'indication d'emplacement géographique du dispositif mobile au système de serveur (140).

2. Procédé selon la revendication 1, comprenant :
la détermination d'un autre emplacement géographique du dispositif mobile (110) à l'aide d'un GPS;
sur la base de l'autre emplacement géographique, la détermination que le dispositif mobile (110) est en dehors de la zone représentée par la seconde barrière géographique qui est une barrière géographique passive et dans la zone représentée par la première barrière géographique qui est une barrière géographique active ; et
la reprise de l'indication d'emplacement géographique du dispositif mobile (110) au système de serveur (140).

3. Procédé selon la revendication 1, comprenant le stockage des informations de mappage sur le dispositif mobile (110) ou l'accès aux informations de mappage au niveau du système de serveur (140).

4. Dispositif mobile (110) comprenant :
une mémoire ; et
au moins un processeur couplé à la mémoire, la mémoire stockant un code pour commander l'au moins un processeur pour exécuter le procédé selon l'une quelconque des revendications 1 à 3.

5. Support lisible par machine portant des instructions pour amener une machine à exécuter le procédé selon l'une quelconque des revendications 1 à 3.
